# EUROPEAN PATENT APPLICATION

(11) **EP 3 382 398 A1**
(43) Date of publication of application: **03.10.2018**
(21) Application number: 16868723.4
(22) Date of filing: 25.11.2016
(51) Int. Cl.: G01N 35/04, G01N 35/00

(54) **SAMPLE ANALYZING DEVICE**

(30) Priority: 27.11.2015 JP 2015232375
(71) Applicant: Sysmex Corporation, Kobe-shi, Hyogo 651-0073 (JP)
(72) Inventor: KATSUMI, Hironori, Kobe-shi Hyogo 651-0073 (JP); SAITO, Shunsuke, Kobe-shi Hyogo 651-0073 (JP); ODA, Kohei, Kobe-shi Hyogo 651-0073 (JP)
(74) Representative: Hoffmann Eitle
(86) International application number: PCT/JP2016/085994
(87) International publication number: WO 2017/090780

(57) **Abstract**

A sample analyzer achieving reduced installation area and improved sample processing performance is provided. A sample analyzer (10) includes a heating table (11), a reagent dispensing unit (12) that dispenses a reagent into a reaction container (33), a first holder (13a) and a second holder (13c) that each hold the reaction container (33) housing a measurement specimen prepared from a sample and the reagent, a detection unit (13) including a first detector (13b) and a second detector (13d) that each detect an analysis signal from the measurement specimen in the reaction container (33), a second controller (24b) that analyzes the sample based on a signal detected by the detection unit (13), a first transfer unit (14) that transfers the reaction container (33) held on the heating table (11) to one of the holders (13a) in a first region (13e), and a second transfer unit (15) that transfers the reaction container (33) held on the heating table (11) to one of the holders (13d) in a second region (13f).

## Description

### BACKGROUND

The present invention relates to a sample analyzer that analyzes a specimen prepared by mixing a sample and a reagent.

A sample analyzer that analyzes a specimen prepared by mixing a sample and a reagent has been known. For example, Patent Document 1 discloses a blood coagulation measuring apparatus. In this blood coagulation measuring apparatus, a sample container housing a sample is transported by a rack, and the sample housed in the sample container is dispensed into a cuvette. The cuvette in which the sample is dispensed is transferred to a heating table unit. After a reagent is dispensed into the cuvette at the heating table unit, the cuvette is transferred to a detection unit by a third catcher unit. The detection unit performs optical measurement on a specimen housed in the cuvette. The cuvette housing the specimen on which the measurement is ended is dropped into a discarding hole by the third catcher unit.

### PRIOR ART DOCUMENT

### PATENT DOCUMENT

Patent Document 1: Japanese Unexamined Patent Application Publication No. 2010-133920

### SUMMARY

In a blood coagulation test among clinical tests, predetermined measurement conditions such as a reagent dispense timing and a heating duration are required to be precisely satisfied to obtain an accurate measurement result.

The blood coagulation measuring apparatus calculates a coagulation time by placing a cuvette housing a specimen at the detection unit and calculating a time in which coagulation reaction ends based on temporal change of a signal detected by the detection unit. However, the coagulation time differs between samples, and thus it is impossible to determine, in advance, the time in which the coagulation reaction of a specimen ends.

With such a restriction, the sample analyzer is desired to have reduced installation area and improved sample processing performance.

A first aspect of the present invention relates to a sample analyzer. The sample analyzer according to the aspect may include: a heating table including: holding holes in which reaction containers each housing a sample are held, respectively; and a heater that heats the reaction containers held in the holding holes, respectively; a reagent dispensing unit that dispenses a reagent into the reaction containers heated on the heating table; a detection unit including: holders that hold the reaction containers each housing a measurement specimen prepared from each sample and the reagent, respectively; and detectors that detect analysis signals from the measurement specimens in the reaction containers held by the holders, respectively; a controller that analyzes each sample based on each analysis signal detected by the detection unit; a first transfer unit that transfers one of the reaction containers held in the holding holes of the heating table to one of the holders positioned in a first region of the detection unit; and a second transfer unit that transfers one of the reaction containers held in the holding holes of the heating table to one of the holders positioned in a second region of the detection unit, which is different from the first region.

A second aspect of the present invention relates to a sample analyzer. The sample analyzer according to the aspect may include: a detection unit including: holders that hold reaction containers each housing a measurement specimen prepared from a sample and a reagent, respectively, and detectors that detect analysis signals from the measurement specimens in the reaction containers held in the holders, respectively; a controller that analyzes each sample based on each analysis signal detected by the detection unit; a discarding unit configured to house one or more reaction containers that is to be discarded; a first discarding transfer unit that transfers, to the discarding unit, one of the reaction containers held by the holders positioned in a first region of the detection unit and to be discarded; and a second discarding transfer unit that transfers, to the discarding unit, one of the reaction containers held by the holders positioned in a second region of the detection unit, which is different from the first region, and to be discarded.

The present invention may enable reduction of the installation area of a sample analyzer and improvement of sample processing performance.

### BRIEF DESCRIPTION OF DRAWINGS

FIG. 1 is a diagram schematically illustrating an outline configuration of a sample analyzer according to one or more embodiments;
FIG. 2 is a diagram illustrating a specific configuration of a sample analyzer according to one or more embodiments;
FIG. 3A is a diagram illustrating a section of a reaction container according to one or more embodiments when viewed from side; FIGS. 3B and 3C are each a diagram schematically illustrating a configuration of a transfer unit according to one or more embodiments;
FIG. 4A is a diagram schematically illustrating a configuration of a transfer unit according to one or more embodiments; FIGS. 4B and 4C are each a diagram schematically illustrating a configuration of the vicinity of an arm of a transfer unit according to one or more embodiments;
FIG. 5A is a diagram illustrating a configurations of a reaction container housing unit and a reaction container supplying unit according to one or more embodiments; FIG. 5B is a diagram illustrating a configuration of a reaction container supplying unit according to one or more embodiments;
FIG. 6 is a diagram schematically illustrating configurations of a reagent dispenser, a reagent table, a support unit, and a base according to one or more embodiments;
FIG. 7 is a diagram schematically illustrating a configuration of the vicinity of a heating table according to one or more embodiments;
FIG. 8A is a diagram schematically illustrating a configuration of a light irradiation unit according to one or more embodiments; FIG. 8B is a diagram illustrating a filter unit when viewed from a light incident side;
FIG. 9A is a cross-sectional view illustrating a detector according to one or more embodiments taken along a plane parallel to a Y-Z plane; FIG. 9B is a cross-sectional view illustrating a detector according to one or more embodiments taken along a plane parallel to a X-Z plane;
FIG. 10A is a perspective view schematically illustrating a configuration of a housing according to one or more embodiments; FIG. 10B is a pattern diagram illustrating a configuration of a housing according to one or more embodiments when viewed from above;
FIG. 11 is a block diagram illustrating a circuit configuration of a measurement unit and a configuration of an information processing device according to one or more embodiments;
FIG. 12 is a diagram illustrating a path of a reaction container according to one or more embodiments is transferred; and
FIG. 13 is a diagram illustrating a path of a reaction container according to one or more embodiments is transferred.

### DETAILED DESCRIPTION

A sample analyzer according to one or more embodiments may be a blood coagulation analysis device that performs analysis related to blood coagulability by emitting light to a measurement specimen prepared by adding a reagent to a sample and analyzing obtained transmitted light or scattered light by a coagulation method, a synthetic substrate method, immunonephelometry, or an agglutination method. A sample analyzed in one or more embodiments is plasma or serum separated from blood.

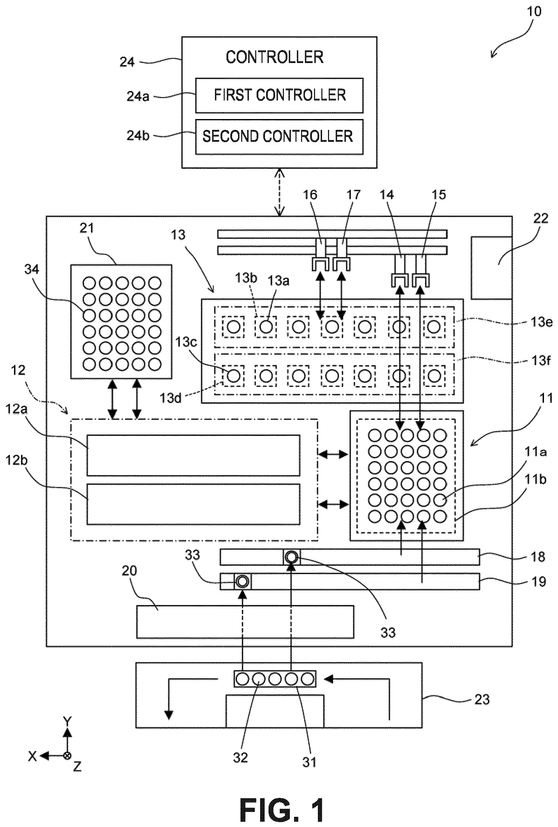

The following describes the outline of the sample analyzer according to one or more embodiments with reference to FIG. 1. In FIG. 1, the X axis, the Y axis, and the Z axis are orthogonal to each other. The positive direction of the X axis corresponds to the leftward direction, the positive direction of the Y axis corresponds to the backward direction, and the positive direction of the Z axis corresponds to the vertically downward direction. In any other drawing, the X axis, the Y axis, and the Z axis are set in a manner same as that in FIG. 1.

A sample analyzer 10 includes a heating table 11, a reagent dispensing unit 12, a detection unit 13, a first transfer unit 14, a second transfer unit 15, a first discarding transfer unit 16, a second discarding transfer unit 17, a first sample transfer unit 18, a second sample transfer unit 19, a sample dispensing unit 20, a reagent table 21, a discarding unit 22, a transporter 23, and a controller 24. The first transfer unit 14, the second transfer unit 15, the first discarding transfer unit 16, and the second discarding transfer unit 17 each include a catcher that grasps a reaction container 33, and a mechanism that drives the catcher.

The transporter 23 transports a sample rack 31 holding a sample container 32. The sample dispensing unit 20 aspirates a sample housed in the sample container 32, and discharges the aspirated sample to the reaction container 33. The first sample transfer unit 18 and the second sample transfer unit 19 each transfer the reaction container 33 in which a sample is dispensed to the heating table 11.

The heating table 11 includes a holding hole 11a and a heater 11b. The holding hole 11a holds the reaction container 33 having been transferred by the first sample transfer unit 18 or the second sample transfer unit 19. The heater 11b heats the reaction container 33 held in the holding hole 11a to 37°C. A time for which the reaction container 33 is heated by the heating table 11 is determined for each measurement item so that an accurate measurement result is obtained at the detection unit 13. For a measurement item PT, the heating time is three minutes, for example, when Thrombocheck (registered trademark) PT Plus manufactured by Sysmex Corporation is used. For a measurement item APTT, the heating time is three minutes, for example, when Thrombocheck (registered trademark) APTT manufactured by Sysmex Corporation is used. For a measurement item D-dimer, the heating time is three minutes, for example, when LIASAUTO (registered trademark) D-dimer Neo manufactured by Sysmex Corporation is used.

The reagent dispensing unit 12 includes a first reagent dispenser 12a and a second reagent dispenser 12b. The first reagent dispenser 12a aspirates a reagent from a reagent container 34 held by the reagent table 21, and discharges the aspirated reagent into the reaction container 33 at a predetermined position while the reaction container 33 is transferred from the heating table 11 to a first holder 13a in a first region 13e of the detection unit 13 by the first transfer unit 14. The second reagent dispenser 12b aspirates a reagent from the reagent container 34 held by the reagent table 21, and discharges the aspirated reagent into the reaction container 33 at a predetermined position while the reaction container 33 is transferred from the heating table 11 to a second holder 13c in a second region 13f of the detection unit 13 by the second transfer unit 15.

When a reagent needs to be dispensed into the reaction container 33 heated on the heating table 11 depending on a measurement item, the first reagent dispenser 12a and the second reagent dispenser 12b each also aspirate the corresponding reagent from the reagent container 34 held by the reagent table 21 and dispense the aspirated reagent into the reaction container 33 heated on the heating table 11.

The detection unit 13 includes the first holders 13a, and first detectors 13b provided for the respective first holders 13a. The detection unit 13 also includes the second holders 13c, and second detectors 13d provided for the respective second holders 13c. The first holders 13a and the first detectors 13b are arranged in parallel to the X axis on the positive side of the detection unit 13 along the Y axis. The second holders 13c and the second detectors 13d are arranged in parallel to the X axis on the negative side of the detection unit 13 along the Y axis. The first holders 13a and the first detectors 13b are disposed in the first region 13e on the positive side of the detection unit 13 along the Y axis, and the second holders 13c and the second detectors 13d are disposed in the second region 13f on the negative side of the detection unit 13 along the Y axis.

The first region 13e and the second region 13f do not necessarily need to extend in the direction of the X axis as illustrated in FIG. 1, but may set to be, for example, two regions obtained by dividing, in the direction of the X axis, a region in which the holders and the detectors are disposed. The first region 13e and the second region 13f may be set in any other arrangement.

The first and second holders 13a and 13c substantially have configurations identical to each other, and the first and second detectors 13b and 13d substantially have configurations identical to each other. Each first detector 13b detects an analysis signal from a measurement specimen in the reaction container 33 held by the first holder 13a. Each second detector 13d detects an analysis signal from a measurement specimen in the reaction container 33 held by the second holder 13c.

The first detector 13b and the second detector 13d emit light to a side surface of the reaction container 33 held by the first holder 13a and the second holder 13c, respectively, receives transmitted light or scattered light thereof through an optical detector, and output a detection signal in accordance with the amount of received light. The detection signal is output to a second controller 24b of the controller 24. The first detector 13b and the second detector 13d each irradiate the reaction container 33 with light having several different wavelengths in a time divisional manner and output a detection signal for light having each wavelength to the second controller 24b. The first detector 13b and the second detector 13d are each configured to perform measurement for all items of measurement performed by the sample analyzer 10. Change of reaction occurring in a measurement specimen in the reaction container 33 differs between samples, and thus a necessary time until measurement is completed also differs between the samples.

The first transfer unit 14 transfers the reaction container 33 held in the holding hole 11a of the heating table 11 to one of the first holders 13a included in the first region 13e of the detection unit 13. The second transfer unit 15 transfers the reaction container 33 held in the holding hole 11a of the heating table 11 to one of the second holders 13c included in the second region 13f of the detection unit 13. In other words, the first transfer unit 14 is used to transfer the reaction container 33 to the first region 13e, and the second transfer unit 15 is used to transfer the reaction container 33 to the second region 13f.

The reaction container 33 on which measurement is ended at the detection unit 13 is discarded by the first discarding transfer unit 16 or the second discarding transfer unit 17 as needed. The first discarding transfer unit 16 transfers the reaction container 33 as a discarding target held by the first holder 13a in the first region 13e to the discarding unit 22. The second discarding transfer unit 17 transfers the reaction container 33 as a discarding target held by the second holder 13c in the second region 13f to the discarding unit 22. The reaction containers 33 as discarding targets at the detection unit 13 can be transferred to the discarding unit 22 in parallel by the first discarding transfer unit 16 and the second discarding transfer unit 17.

The first sample transfer unit 18 and the second sample transfer unit 19 each transfer, to the heating table 11, the reaction container 33 into which a sample is dispensed by the sample dispensing unit 20 as described above. The sample dispensing unit 20 aspirates a sample from the sample container 32 at a predetermined position on a transport path of the transporter 23, and dispenses the aspirated sample into the reaction container 33. The reagent table 21 holds the reagent containers 34 housing various kinds of reagents used in measurement, respectively. The discarding unit 22 includes a discarding port. The reaction container 33 on which measurement is performed and that is transferred by the first discarding transfer unit 16 and the second discarding transfer unit 17 is dropped into the discarding port of the discarding unit 22.

The controller 24 includes a first controller 24a and the second controller 24b. The first controller 24a controls a mechanism that measures a measurement specimen in the sample analyzer 10. The second controller 24b analyzes a sample in the reaction container 33 based on signals detected by the first detector 13b and the second detector 13d.

As described above, the first detector 13b and the second detector 13d output detection signals obtained from a measurement specimen when irradiated with light having several different wavelengths, respectively, to the second controller 24b. The second controller 24b performs sample analysis based on an acquired detection signal for each wavelength by the coagulation method, the synthetic substrate method, the immunonephelometry, or the agglutination method.

For example, in a coagulation time method, a time in which fibrinogen converts into fibrin is analyzed by irradiating a measurement specimen with light having a wavelength of 660 nm, and detecting transmitted light or scattered light from the measurement specimen by the optical detectors. Measurement items in the coagulation time method are, for example, PT (prothrombin time), APTT (activated partial thromboplastin time), and Fbg (fibrinogen amount). In the synthetic substrate method, a measurement specimen is irradiated with light having a wavelength of 405 nm, and transmitted light or scattered light from the measurement specimen is detected by the optical detectors. Measurement items in the synthetic substrate method are, for example, ATIII, α2-PI (α2-plasmin inhibitor), and PLG (plasminogen). In the immunonephelometry, a measurement specimen is irradiated with light having a wavelength of 800 nm, and transmitted light or scattered light from the measurement specimen is detected by the optical detectors. Measurement items in the immunonephelometry are, for example, D-dimer and FDP. In a platelet agglutination method, a measurement specimen is irradiated with light having a wavelength of 575 nm, and transmitted light or scattered light from the measurement specimen is detected by the optical detectors.

For example, the second controller 24b calculates the absorbance of a measurement specimen based on detection signals output from the first detector 13b and the second detector 13d, and calculates, as the coagulation time of the measurement specimen, a time until the calculated absorbance exceeds a predetermined threshold. The turbidity of the measurement specimen may be calculated in place of the absorbance from the detection signals, and a time until the turbidity exceeds a predetermined threshold may be calculated as the coagulation time of the sample. Alternatively, a time until the detection signals output from the first detector 13b and the second detector 13d each exceed a predetermined threshold may be calculated as the coagulation time of the measurement specimen.

The reagent dispensing unit 12 aspirates, from the reagent container 34 held by the reagent table 21, a reagent corresponding to a measurement item of a sample housed in the reaction container 33, and dispenses the aspirated reagent into the reaction container 33.

For example, when measurement is performed for the measurement item APTT based on the coagulation time method, the reagent dispensing unit 12 aspirates a first reagent including phospholipid and an activator from the reagent container 34 housing the first reagent, and dispenses the aspirated first reagent into the reaction container 33 heated on the heating table 11. In this manner, the first reagent is mixed into a sample. Thereafter, when the reaction container 33 is transferred from the heating table 11 to the detection unit 13, the reagent dispensing unit 12 aspirates a second reagent including calcium salt from the reagent container 34 housing the second reagent, and dispenses the aspirated second reagent into the reaction container 33. In this manner, the second reagent is mixed into the sample.

When measurement is performed on the measurement item PT based on the coagulation time method, the reagent dispensing unit 12 aspirates a reagent including a tissue factor and calcium salt from the reagent container 34 containing the reagent, and dispenses the aspirated reagent into the reaction container 33 to be transferred from the heating table 11 to the detection unit 13. In this case, when the reaction container 33 is to be transferred to the heating table 11, the reagent is not dispensed into the reaction container 33. In this manner, the reagent including a tissue factor and calcium salt is mixed into a sample.

The detection unit 13 acquires a detection signal from a measurement specimen in which a reagent corresponding to the measurement item APTT or the measurement item PT is mixed as described above, and outputs the detection signal to the second controller 24b. The second controller 24b analysis a time in which fibrinogen converts into fibrin for a sample based on the detection signal supplied from the detection unit 13 as described above, and acquires an analysis result.

In an analysis based on the coagulation time method, coagulation of a measurement specimen needs to be waited, and thus measurement takes time. Typically, in an analysis based on the coagulation time method, the reaction container 33 needs to be held by the first holder 13a or the second holder 13c for several minutes to allow continuous detection by the first detector 13b or the second detector 13d. Accordingly, the reaction container 33 is likely to accumulate at the detection unit 13.

In addition, it is necessary to wait for a measurement specimen to be heated to a predetermined temperature on the heating table 11, and the heating takes time. Typically, the reaction container 33 needs to be continuously held in the holding hole 11a of the heating table 11 for several minutes until heating of a measurement specimen is completed. Accordingly, the reaction container 33 is likely to accumulate on the heating table 11.

In the sample analyzer 10 according to one or more embodiments, the reaction containers 33 are transferred from the heating table 11 to the detection unit 13 in parallel by the first transfer unit 14 and the second transfer unit 15. Thus, the reaction container 33 to be transferred from the heating table 11 to the detection unit 13 can avoid a wait for transfer, and the holding hole 11a of the heating table 11 can be immediately released for reception of the next reaction container 33. Accordingly, the processing performance of the sample analyzer 10 can be improved.

The time for which the reaction container 33 is heated by the heating table 11 is determined for each measurement item so that an accurate measurement result is obtained at the detection unit 13. To heat accurately the reaction container 33 in accordance with a measurement item, the reaction container 33 needs to be transferred from the holding hole 11a of the heating table 11 at an appropriate timing. In the sample analyzer 10, a plurality of transfer units, namely, the first transfer unit 14 and the second transfer unit 15 are provided to transfer the reaction containers 33 from the heating table 11, and thus the reaction containers 33 can be transferred from the heating table 11 at an appropriate timing. Accordingly, an accurate heating time can be easily achieved.

Since change of reaction occurring in a measurement specimen is detected by the coagulation time method, the immunonephelometry, and the platelet agglutination method, in particular, a time until measurement is completed differs between samples. Thus, it is difficult to accurately expect how long the reaction container 33 needs to be held by the first holder 13a and the second holder 13c of the detection unit 13. Accordingly, for any sample, the reaction container 33 is held by the holder substantially for the time until measurement is completed. As a result, the reaction container 33 is likely to accumulate at the detection unit 13. However, in the sample analyzer 10, a plurality of transfer units, namely, the first transfer unit 14 and the second transfer unit 15 are provided to transfer the reaction containers 33 to the detection unit 13, and thus the reaction containers 33 can be transferred fast to empty holders of the detection unit 13. Accordingly, the processing performance of the sample analyzer 10 can be improved.

The first detector 13b and the second detector 13d are each configured to perform measurement for all items of measurement performed by the sample analyzer 10. Accordingly, the detection unit 13 can accept the reaction container 33 irrespective of a measurement item, and thus the processing performance of the sample analyzer 10 can be improved.

Since the heating table 11 is shared by the first transfer unit 14 and the second transfer unit 15, components can be collectively disposed as compared to a case in which a heating table is individually disposed for each of the first transfer unit 14 and the second transfer unit 15. Accordingly, increase of the installation area of the sample analyzer 10 can be prevented.

The first transfer unit 14 and the second transfer unit 15 are associated with the first region 13e and the second region 13f, respectively, and thus can be smoothly controlled.

In addition, the reaction containers 33 as discarding targets at the detection unit 13 can be transferred to the discarding unit 22 in parallel by the first discarding transfer unit 16 and the second discarding transfer unit 17. Thus, any reaction container 33 to be discarded can be prevented from remaining at the detection unit 13, and thus the first holder 13a and the second holder 13c of the detection unit 13 can be each immediately released for reception of the next reaction container 33. With this configuration, the reaction containers 33 can be smoothly transferred to the detection unit 13. Accordingly, the processing performance of the sample analyzer 10 can be improved.

The reaction containers 33 in which samples are dispensed are transferred to the heating table 11 in parallel by the first sample transfer unit 18 and the second sample transfer unit 19. With this configuration, the reaction containers 33 in which samples are dispensed can be efficiently transferred from the sample container 32 to the heating table 11. Accordingly, the processing performance of the sample analyzer 10 can be improved.

The number of transfer units that each transfer the reaction container 33 from the heating table 11 to the detection unit 13 does not necessarily need to be two, but may be three or more. The number of transfer units that each transfer the reaction container 33 from the detection unit 13 to the discarding unit 22 does not necessarily need to be two, but may be one, or three or more. The number of reagent dispensers included in the reagent dispensing unit 12 is not limited to two, but may be one, or three or more. The number of transfer units that each transfer, to the heating table 11, the reaction container 33 in which a sample is dispensed by the sample dispensing unit 20 does not necessarily need to be two.

### <Exemplary specific configuration>

The following describes a specific configuration of the sample analyzer according to one or more embodiments.

In an exemplary configuration described below, the detection unit is divided in two detection units disposed at positions different from each other. A transfer unit that transfers a reaction container from the heating table to the detection unit also serves as a transfer unit that transfers a reaction container from the detection unit to the discarding unit. For sake of simplicity, in the following description, a reagent dispensed in a reaction container when transferred from the heating table to the detection unit is referred to as a "trigger reagent", and a reagent dispensed in a reaction container when heated on the heating table is referred to as an "adjustment reagent". The trigger reagent is a reagent that causes a sample to start reaction, and the adjustment reagent is a reagent that prompts the reaction by the trigger reagent.

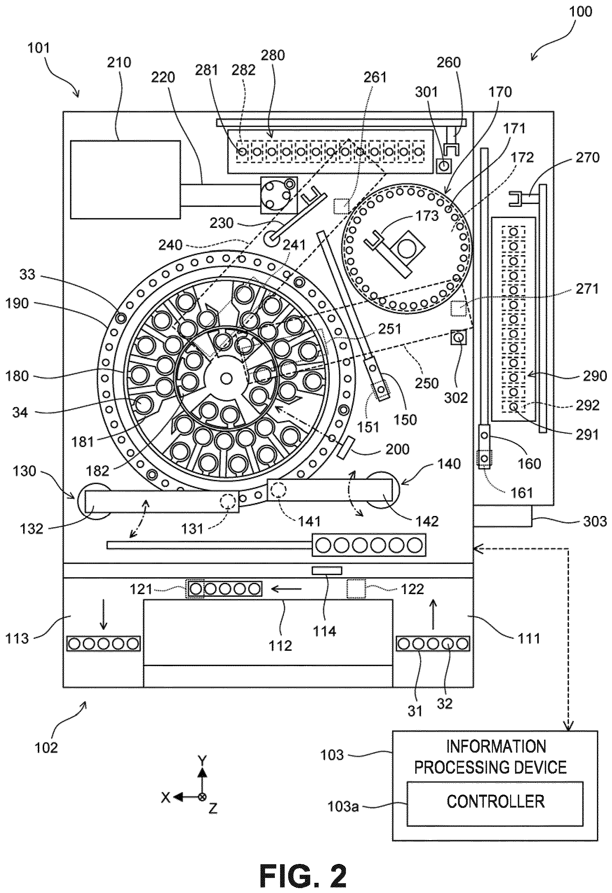

As illustrated in FIG. 2, a sample analyzer 100 includes a measurement unit 101, a transporter 102, and an information processing device 103.

The transporter 102 corresponds to the transporter 23 in FIG. 1. The transporter 102 includes a rack setter 111, a rack transporter 112, a rack collector 113, and a bar code reader 114. The rack setter 111 and the rack collector 113 are connected to right and left ends of the rack transporter 112, respectively. The bar code reader 114 is disposed behind the rack transporter 112 and movable in the right and left directions.

A user places, on the rack setter 111, the sample rack 31 on which the sample container 32 is set. Bar codes are attached to the sample rack 31 and the sample container 32. The transporter 102 transfers the sample rack 31 placed on the rack setter 111 to the right end of the rack transporter 112 and further transfers the sample rack 31 to the front side of the bar code reader 114. The bar code reader 114 reads the bar code attached to the sample rack 31, and also reads the bar code attached to the sample container 32. The bar code of the sample rack 31 holds identification information for identifying the sample rack 31, and the bar code of the sample container 32 holds identification information for identifying a sample housed in the sample container 32. The read identification information is transmitted to the information processing device 103 for acquisition of a measurement item for the sample.

Thereafter, the transporter 102 transports the sample rack 31 and locates the sample container 32 sequentially at a sample aspirating position 121 and a sample aspirating position 122. At the sample aspirating positions 121 and 122, the sample is aspirated from the sample container 32. When the sample aspiration ends for all sample containers 32 held by the sample rack 31, the transporter 102 transports the sample rack 31 to the rack collector 113.

The measurement unit 101 aspirates the sample from the sample container 32 at the sample aspirating positions 121 and 122, and mixes a reagent with the aspirated sample to perform measurement.

The measurement unit 101 includes sample dispensers 130 and 140, transfer units 150 and 160, a heating table 170, a reagent table 180, a reaction container table 190, a bar code reader 200, a reaction container housing unit 210, a reaction container supplying unit 220, a transfer unit 230, reagent dispensers 240 and 250, transfer units 260 and 270, detection units 280 and 290, discarding ports 301 and 302, and a discarding unit 303.

The sample dispensers 130 and 140 are included in the sample dispensing unit 20 in FIG. 1. The sample dispenser 130 includes a pipette 131, a rotatable arm 132 provided with the pipette 131 at an end part, a drive unit (not illustrated) that drives the arm 132, and a pump (not illustrated) that aspirates and discharges a sample through the pipette 131. Similarly, the sample dispenser 140 includes a pipette 141, a rotatable arm 142 provided the pipette 141 at an end part, a drive unit (not illustrated) that drives the arm 142, and a pump (not illustrated) that aspirates and discharges a sample through the pipette 141.

The sample dispenser 130 aspirates a sample from the sample container 32 located at the sample aspirating position 121, and discharges the aspirated sample into the new reaction container 33 held on the reaction container table 190. The sample dispenser 140 aspirates a sample from the sample container 32 located at the sample aspirating position 122 or the reaction container 33 held on the reaction container table 190, and discharges the aspirated sample into the new reaction container 33 held by one of the transfer units 150 and 160.

The transfer units 150 and 160 correspond to the first sample transfer unit 18 and the second sample transfer unit 19 in FIG. 1, respectively. The transfer units 150 and 160 are each movable forward and backward along a rail. The transfer units 150 and 160 are each provided with a holding hole used to hold the reaction container 33.

The transfer unit 150 holds the new reaction container 33 in the holding hole and locates the reaction container 33 at a first sample discharging position 151. As described later, the new reaction container 33 is set to the transfer unit 150 by the transfer unit 230. Once the sample dispenser 140 discharges a sample into the reaction container 33 located at the first sample discharging position 151, the transfer unit 150 transfers the reaction container 33 to the back side and locates the reaction container 33 near the left side of the heating table 170. A transfer unit 173 of the heating table 170 transfers the reaction container 33 located near the left side of the heating table 170 to a holding hole 171 of the heating table 170.

Similarly, the transfer unit 160 holds the new reaction container 33 in the holding hole, and locates the reaction container 33 at a second sample discharging position 161. As described later, the new reaction container 33 is set to the transfer unit 160 by the transfer unit 260. Once the sample dispenser 140 discharges a sample into the reaction container 33 located at the second sample discharging position 161, the transfer unit 160 transfers the reaction container 33 to the back side, and locates the reaction container 33 near the right side of the heating table 170. The transfer unit 270 transfers the reaction container 33 located near the right side of the heating table 170 to the holding hole 171 of the heating table 170.

In this manner, the reaction containers 33 can be transferred to the heating table 170 by the transfer units 150 and 160, and thus, the processing performance can be improved as compared to a case in which the reaction containers 33 are transferred to the heating table 170 by one of the transfer units 150 and 160.

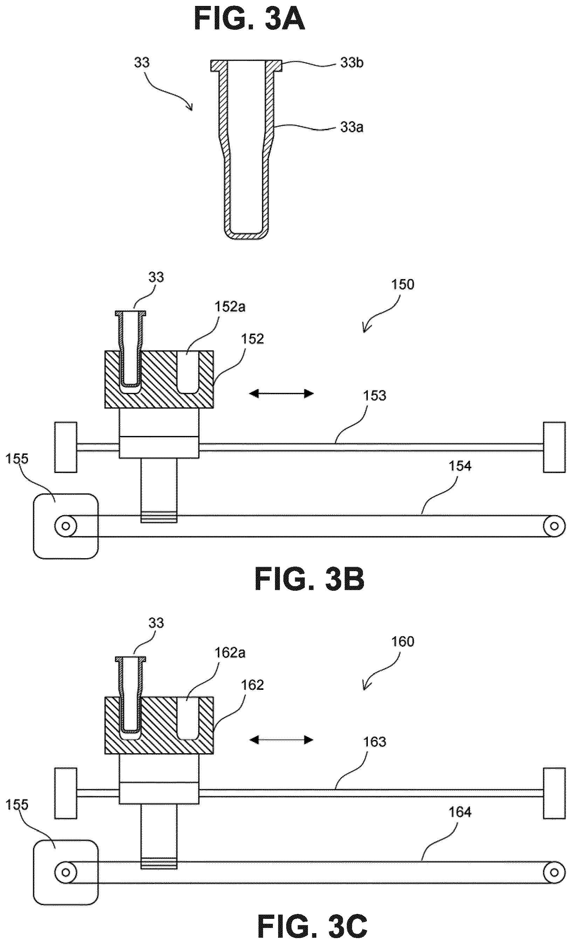

As illustrated in FIG. 3A, the reaction container 33 is a cuvette. The reaction container 33 includes a circumferential body part 33a including an upward opening, and a flange part 33b provided above the body part 33a. The lower part of the body part 33a has a diameter smaller than that of the upper part thereof.

As illustrated in FIG. 3B, the transfer unit 150 includes a holder 152 including two holding holes 152a used to hold the reaction container 33, a rail 153 that guides the holder 152, a belt 154 connected to the holder 152, and a motor 155 that drives the belt 154. For sake of simplicity, FIG. 3B illustrates the holder 152 in cross-sectional view. The holding holes 152a have diameters that allow fitting of the lower part of the reaction container 33. The rail 153 is provided along a direction in which the reaction container 33 is transferred. The belt 154 is disposed in parallel to the rail 153. The belt 154 is disposed around a drive shaft of the motor 155 and a pulley. The lower end of the holder 152 is mounted on the belt 154. When the belt 154 is driven by the motor 155, the holder 152 is transferred while being guided by the rail 153. Accordingly, the reaction container 33 is transferred.

As illustrated in FIG. 3C, the transfer unit 160 substantially has a configuration same as that of the transfer unit 150. The transfer unit 160 includes a holder 162 including two holding holes 162a used to hold the reaction container 33, a rail 163 that guides the holder 162, a belt 164 connected to the holder 162, and a motor 165 that drives the belt 164. For sake of simplicity, FIG. 3C illustrates the holder 162 in cross-sectional view.

As illustrated in FIG. 2, the heating table 170 includes the holding holes 171 in which the reaction containers 33 each housing a sample are held, respectively, a heater 172 that heats the reaction containers 33 held in the holding holes 171, respectively, and the transfer unit 173 that transfers the reaction containers 33. The heating table 170, each holding hole 171, and the heater 172 correspond to the heating table 11, the holding hole 11a, and the heater 11b in FIG. 1, respectively.

The heating table 170 has a circular outline in a plan view and is rotatable in the circumferential direction. When the heating table 170 rotates in the circumferential direction, the holding holes 171 are transferred in the circumferential direction. The heater 172 heats the reaction containers 33 held in the holding holes 171 to 37°C. The transfer unit 173 is rotatable in the circumferential direction of the heating table 170.

The reagent table 180 corresponds to the reagent table 21 in FIG. 1. The reagent containers 34 each housing a reagent can be placed on the reagent table 180. On the reagent table 180, three reagent racks 181 that can each house the ten reagent containers 34 are set on the outer periphery side, and four reagent racks 182 that can each house the two reagent containers 34 are set on the inner periphery side. The reagent table 180 is rotatable in the circumferential direction. As the reagent table 180 rotates in the circumferential direction, the reagent containers 34 placed on the reagent table 180 through the reagent racks 181 and 182 are transferred to a first aspirating position 241 at which reagent aspiration is performed by the reagent dispenser 240, and a second aspirating position 251 at which reagent aspiration is performed by the reagent dispenser 250.

The reagent dispensers 240 and 250 correspond to the first reagent dispenser 12a and the second reagent dispenser 12b in FIG. 1, respectively. The reagent dispensers 240 and 250 dispense reagents into the reaction containers 33 heated on the heating table 170.

For example, when the adjustment reagent is dispensed into the reaction container 33, the transfer unit 173 of the heating table 170 locates, at a first discharge position 261 or a second discharge position 271, the reaction container 33 held in one of the holding holes 171 of the heating table 170. The reagent dispenser 240 or the reagent dispenser 250 aspirates the adjustment reagent from the reagent container 34 located at the first aspirating position 241 or the second aspirating position 251 and dispenses the aspirated adjustment reagent into the reaction container 33 located at the first discharge position 261 or the second discharge position 271. In this manner, the adjustment reagent is mixed into a sample. Thereafter, the transfer unit 173 sets the reaction container 33 to the holding hole 171 of the heating table 170 again.

When the trigger reagent is dispensed into the reaction container 33, the transfer unit 260 or the transfer unit 270 locates, at the first discharge position 261 or the second discharge position 271, the reaction container 33 held in one of the holding holes 171 of the heating table 170. The reagent dispenser 240 or the reagent dispenser 250 aspirates the trigger reagent from the reagent container 34 located at the first aspirating position 241 or the second aspirating position 251, and dispenses the aspirated trigger reagent into the reaction container 33 located at the first discharge position 261 or the second discharge position 271. In this manner, the trigger reagent is mixed into a sample. Thereafter, the transfer unit 260 or the transfer unit 270 sets the reaction container 33 to a holder 281 of the detection unit 280 or a holder 291 of the detection unit 290.

As described above, only the trigger reagent is discharged into the reaction container 33, or the trigger reagent together with the adjustment reagent are discharged into the reaction container 33, depending on a measurement item set to a sample. When the trigger reagent is discharged into the reaction container 33, the transfer unit 260 grasps the reaction container 33 and locates the reaction container 33 at the first discharge position 261, or the transfer unit 270 grasps the reaction container 33 and locates the reaction container 33 at the second discharge position 271. When the trigger reagent is discharged, the reaction container 33 is transferred to the detection units 280 and 290 by the transfer units 260 and 270, respectively. When the adjustment reagent is discharged into the reaction container 33, the transfer unit 173 grasps the reaction container 33 and locates the reaction container 33 at the first discharge position 261 or the second discharge position 271. When the adjustment reagent is discharged, the transfer unit 173 returns the reaction container 33 to the holding hole 171 of the heating table 170.

The transfer units 260 and 270 correspond to the first transfer unit 14 and the second transfer unit 15 in FIG. 1, respectively.

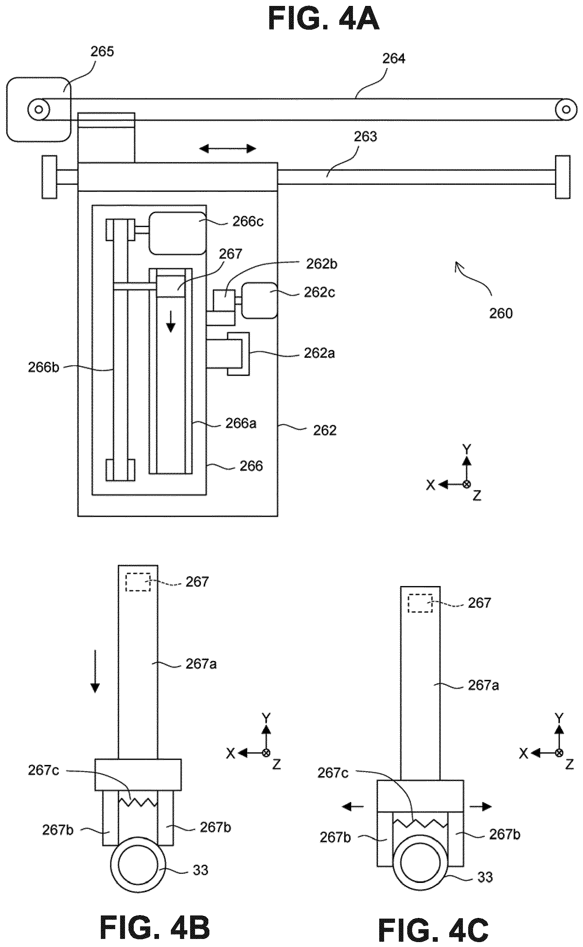

As illustrated in FIG. 4A, the transfer unit 260 includes a support members 262 and a rail 263 that guides the support members 262 and a belt 264 connected to the support members 262 and a motor 265 that drives the belt 264. The rail 263 is provided along the direction of the X axis. The belt 264 is disposed in parallel to the rail 263. The belt 264 is disposed around a drive shaft of the motor 265 and a pulley. An end part of the support member 262 is mounted on the belt 264. When the belt 264 is driven by the motor 265, the support member 262 is transferred in the direction of the X axis while being guided by the rail 263.

The support member 262 is provided with a support members 266 and a rail 262a that guides the support members 266 and a belt 262b connected to the support members 266 and a motor 262c that drives the belt 262b. The rail 262a is provided along the direction of the Z axis. The belt 262b is disposed in parallel to the rail 262a. The belt 262b is disposed around a drive shaft of the motor 262c and a pulley. An end part of the support member 266 is mounted on the belt 262b. When the belt 262b is driven by the motor 262c, the support member 266 is transferred in the direction of the Z axis while being guided by the rail 262a.

The support member 266 is provided with a support members 267 and a rail 266a that guides the support members 267 and a belt 266b connected to the support members 267 and a motor 266c that drives the belt 266b. The rail 266a is provided along the direction of the Y axis. The belt 266b is disposed in parallel to the rail 266a. The belt 266b is disposed around a drive shaft of the motor 266c and a pulley. An end part of the support member 267 is mounted on the belt 266b. When the belt 266b is driven by the motor 266c, the support member 267 is transferred in the direction of the Y axis while being guided by the rail 266a.

As illustrated in FIG. 4B, an end part of an arm 267a on the positive side of the Y axis is installed on a surface of the support member 267 on the negative side of the Z axis. With this configuration, the arm 267a moves in the direction of the Y axis as the support member 267 moves. A pair of clicks 267b are provided at an end part of the arm 267a on the negative side of the Y axis and allowed to become closer to or separated from each other in the direction of the X axis. The pair of clicks 267b are connected to each other by a spring 267c. With this configuration, the pair of clicks 267b are pulled in a direction in which the pair of clicks 267b become closer to each other. As illustrated in FIG. 4B, movement of the pair of clicks 267b is regulated between positions spaced at a predetermined interval, and the pair of clicks 267b are located at these positions.

When the motor 266c is driven and the support member 267 is moved in the negative direction of the Y axis, the arm 267a moves in the negative direction of the Y axis. As illustrated in FIG. 4B, when the arm 267a is further moved in the negative direction of the Y axis while the pair of clicks 267b are in contact with the side surface of the reaction container 33, the clicks 267b slide on the side surface of the reaction container 33 and open in a direction in which the clicks 267b become separated from each other. Accordingly, as illustrated in FIG. 4C, the pair of clicks 267b grasp the reaction container 33. The spring 267c applies, on the pair of clicks 267b, force for grasping the reaction container 33. The pair of clicks 267b serve as a grasping unit that grasps the reaction container 33.

In this manner, the transfer unit 260 drives the motors 265, 262c, and 266c to move the clicks 267b in the directions of the X, Y, and Z axes. Accordingly, the transfer unit 260 grasps and transfers the reaction container 33. The grasping of the reaction container 33 is canceled by, for example, moving the clicks 272b in the positive direction of the Y axis while the reaction container 33 is inserted in the holder 281. As a result, the clicks 267b slide on the side surface of the reaction container 33 to cancel the grasping of the reaction container 33.

The transfer unit 270 has a configuration same as that of the transfer unit 260. In the transfer unit 173, the rail 263 and the belt 264 are replaced with a configuration for rotating the support member 262. For example, the support member 262 is rotatably supported by a support shaft, and drive power from the motor 265 is transferred to the support member 262 through a transmission mechanism such as a gear. Any other configuration of the transfer unit 173 is same as that of the transfer unit 260.

When the trigger reagent is discharged into the reaction container 33, the transfer unit 260 transfers the reaction container 33 held in the holding hole 171 of the heating table 170 to the first discharge position 261. After the trigger reagent is discharged into the reaction container 33, the transfer unit 260 transfers the reaction container 33 to the holder 281 of the detection unit 280. When the trigger reagent is discharged into the reaction container 33, the transfer unit 270 transfers the reaction container 33 held in the holding hole 171 of the heating table 170 to the second discharge position 271. After the trigger reagent is discharged into the reaction container 33, the transfer unit 270 transfers the reaction container 33 to the holder 291 of the detection unit 290.

In this manner, the reagent dispenser 240 dispenses the trigger reagent into the reaction container 33 at the first discharge position 261 on a path through which the reaction container 33 is transferred by the transfer unit 260. The reagent dispenser 250 dispenses the trigger reagent into the reaction container 33 at the second discharge position 271 on a path through which the reaction container 33 is transferred by the transfer unit 270. Accordingly, immediately after the trigger reagent is dispensed, the reaction container 33 can be transferred to the detection units 280 and 290. Since the trigger reagents are dispensed by the reagent dispensers 240 and 250, the trigger reagents can be individually dispensed into the reaction containers 33 transferred by the transfer units 260 and 270. Accordingly, the trigger reagents can be dispensed into the reaction containers 33 in a shorter time, thereby improving processing efficiency of the sample analyzer 100.

The detection unit 280 includes holders 281, and detectors 282 provided for the respective holders 281. The detection unit 290 includes holders 291, and detectors 292 provided for the respective holders 291. Regions in which the detection units 280 and 290 are disposed correspond to the first region 13e and the second region 13f in FIG. 1, respectively. The holders 281 and 291 correspond to the first holder 13a and the second holder 13c in FIG. 1, respectively. The detectors 282 and 292 correspond to the first detector 13b and the second detector 13d in FIG. 1, respectively. The holders 281 and 291 hold the reaction containers 33 each housing a measurement specimen prepared from a sample and a reagent. The detectors 282 and 292 detect analysis signals from the measurement specimens in the reaction containers 33 held by the holders 281 and 291, respectively.

The information processing device 103 includes a controller 103a. The controller 103a corresponds to the second controller 24b in FIG. 1. The controller 103a analyzes a sample in the reaction container 33 held in the holder 281 based on signals detected by the detectors 282, and analyzes a sample in the reaction container 33 held in the holder 291 based on signals detected by the detectors 292.

The discarding unit 303 corresponds to the discarding unit 22 in FIG. 1. The discarding unit 303 includes the discarding ports 301 and 302. The transfer unit 260 transfers, to the discarding port 301 and thus to the discarding unit 303, the reaction container 33 held by the holder 281 of the detection unit 280 and to be discarded. The transfer unit 270 transfers, to the discarding port 302 and thus to the discarding unit 303, the reaction container 33 held by the holder 291 of the detection unit 290 and to be discarded.

The transfer unit 260 has the function of the first transfer unit 14 and the function of the first discarding transfer unit 16 in FIG. 1. The transfer unit 270 has the function of the second transfer unit 15 and the function of the second discarding transfer unit 17 in FIG. 1. In this manner, the functions of the first transfer unit 14 and the first discarding transfer unit 16 are achieved by the transfer unit 260, and the functions of the second transfer unit 15 and the second discarding transfer unit 17 are achieved by the transfer unit 270, which leads to a simple configuration of the sample analyzer 10.

Only one discarding port may be connected to the discarding unit 303. In this case, too, the reaction container 33 to be discarded is transferred to this single discarding port by the transfer units 260 and 270. Two discarding units may be provided for the discarding ports 301 and 302.

The reaction container table 190 has a ring shape in a plan view and is disposed on the outer side of the reagent table 180. The reaction container table 190 is rotatable in the circumferential direction. The reaction container table 190 includes holding holes used to hold the reaction container 33. The bar code reader 200 reads bar codes attached to the reagent racks 181 and 182 and a bar code attached to the reagent container 34. The bar codes of the reagent racks 181 and 182 hold identification information for identifying the reagent racks 181 and 182, and the bar code of the reagent container 34 holds identification information for identifying the reagent container 34.

The reaction container housing unit 210 houses the new reaction containers 33. The reaction container supplying unit 220 supplies the reaction containers 33 from the reaction container housing unit 210.

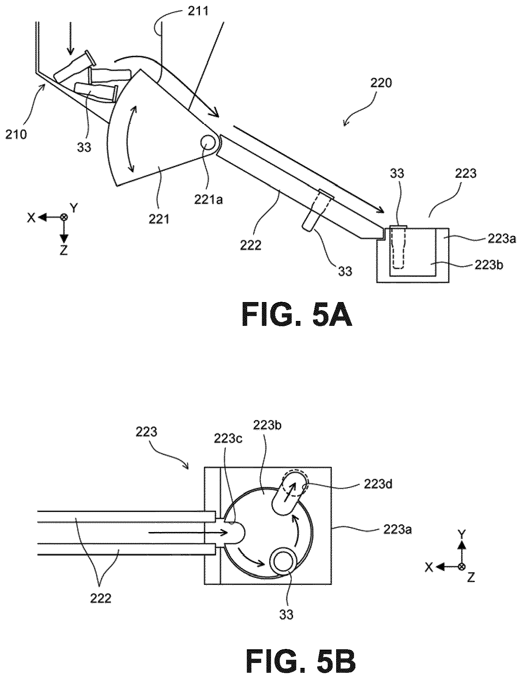

As illustrated in FIG. 5A, the reaction container housing unit 210 includes a slot 211 through which the user can supply any new reaction container 33, and houses the reaction container 33 supplied through the slot 211. The reaction container supplying unit 220 includes a take-out mechanism 221, a guide 222, and a feeding mechanism 223. The take-out mechanism 221 takes out the reaction containers 33 one by one from the reaction container housing unit 210. The guide 222 includes two rails that support the lower surface of the flange part 33b of the reaction container 33. The reaction container 33 taken out by the take-out mechanism 221 slides down while the lower surface of the flange part 33b is supported by the guide 222, and is transferred to the feeding mechanism 223.

As illustrated in FIG. 5B, the feeding mechanism 223 includes a supporting table 223a and a rotation table 223b. The reaction container 33 transferred by the guide 222 is held in a cutout 223c provided to the rotation table 223b. The reaction container 33 held in the cutout 223c is transferred as the rotation table 223b rotates. The reaction container 33 transferred by the rotation table 223b is held in a cutout part 223d provided to the supporting table 223a.

As illustrated in FIG. 2, the transfer unit 230 transfers the new reaction containers 33 each held in the cutout part 223d of the reaction container supplying unit 220 to the holding holes 152a of the transfer unit 150 and the holding holes of the reaction container table 190. The transfer unit 260 transfers the new reaction containers 33 each held in the cutout part 223d of the reaction container supplying unit 220 to the holding holes 162a of the transfer unit 160. In this manner, the new reaction containers 33 supplied by the reaction container supplying unit 220 are transferred to the transfer units 150 and 160 and the reaction container table 190. Accordingly, increase of the installation area of the sample analyzer 100 can be reduced as compared to a case in which reaction container supplying units are provided to supply the new reaction containers 33 to the transfer units 150 and 160 and the reaction container table 190.

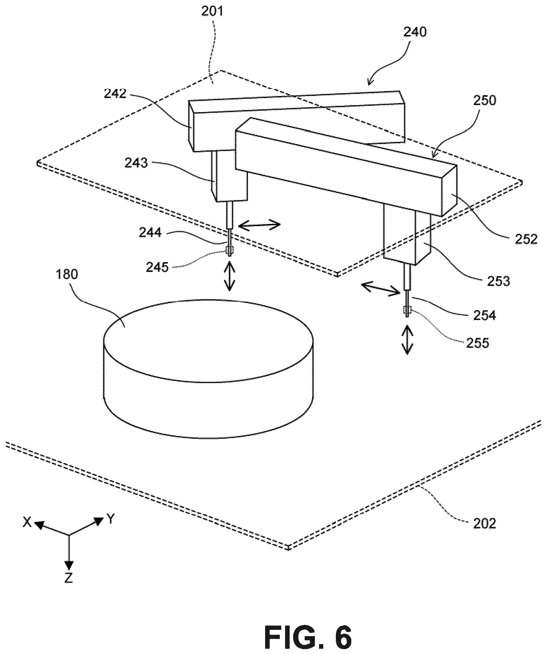

As illustrated in FIG. 6, the reagent dispensers 240 and 250 are supported by a support unit 201 disposed above the reagent table 180. The reagent table 180 is installed on a base 202. The reagent dispensers 240 and 250 partially overlap with the reagent table 180 in the X-Y plane. With this configuration, there is no need to provide the base 202 with a space for installation of the reagent dispensers 240 and 250. Thus, increase of the installation area of the sample analyzer 100 can be reduced as compared to a case in which the reagent dispensers 240 and 250 are disposed on the base 202.

The reagent dispenser 240 includes a horizontal transfer unit 242, a vertical transfer unit 243, a first pipette 244, a first heater 245, and a pump (not illustrated) that aspirates and discharges a reagent through the first pipette 244. The horizontal transfer unit 242 transfers the vertical transfer unit 243 in a predetermined direction in the horizontal plane, in other words, the X-Y plane. The vertical transfer unit 243 transfers the first pipette 244 in the vertical direction, in other words, the direction of the Z axis. The first heater 245 is installed near the lower end of the first pipette 244, and heats a reagent held by the first pipette 244.

When a reagent is dispensed, the reagent dispenser 240 inserts the first pipette 244 into the reagent container 34 located at the first aspirating position 241 illustrated in FIG. 2, and aspirates a reagent inside the reagent container 34. The reagent dispenser 240 allows the reagent held by the first pipette 244 to be heated to a predetermined temperature by the first heater 245. Thereafter, the reagent dispenser 240 discharges the reagent held by the first pipette 244 into the reaction container 33 located at the first discharge position 261.

Similarly, the reagent dispenser 250 includes a horizontal transfer unit 252, a vertical transfer unit 253, a second pipette 254, a second heater 255, and a pump (not illustrated) that aspirates and discharges a reagent through the second pipette 254. The horizontal transfer unit 252 transfers the vertical transfer unit 253 in a predetermined direction in the horizontal plane, in other words, the X-Y plane. The vertical transfer unit 253 transfers the second pipette 254 in the vertical direction, in other words, the direction of the Z axis. The second heater 255 is installed near the lower end of the second pipette 254, and heats a reagent held by the second pipette 254.

When a reagent is dispensed, the reagent dispenser 250 inserts the second pipette 254 into the reagent container 34 located at the second aspirating position 251 illustrated in FIG. 2, and aspirates a reagent inside the reagent container 34. The reagent dispenser 250 allows the reagent held by the second pipette 254 to be heated to a predetermined temperature by the second heater 255. Thereafter, the reagent dispenser 250 discharges the reagent held by the second pipette 254 into the reaction container 33 located at the second discharge position 271.

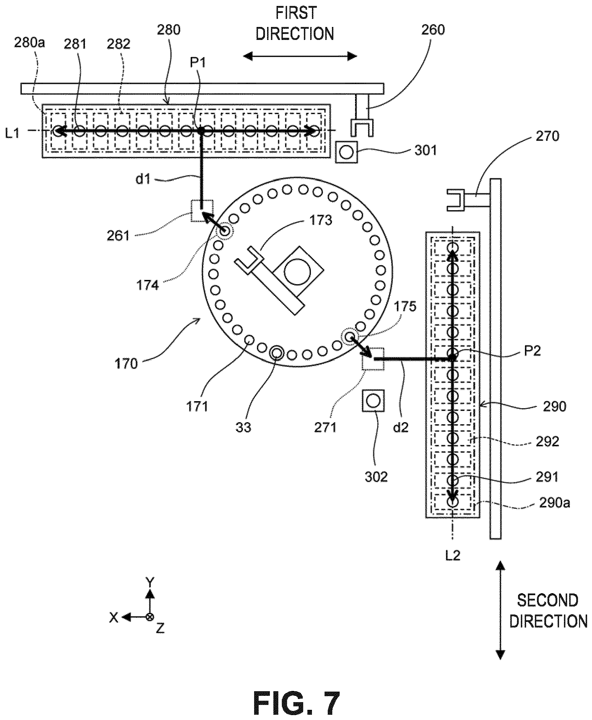

As illustrated in FIG. 7, the holders 281 are disposed side by side in a first direction, in other words, the direction of the X axis in a region 280a of the detection unit 280. The region 280a corresponds to the first region 13e in FIG. 1. The holders 291 are disposed side by side in a second direction, in other words, the direction of the Y axis in a region 290a of the detection unit 290. The region 290a corresponds to the second region 13f in FIG. 1. The heating table 170 is disposed between the line of the holders 281 of the detection unit 280 and the line of the holders 291 of the detection unit 290. With this configuration, the detection units 280 and 290 and the heating table 170 are collectively disposed in a compact area, and thus increase of the installation area of the sample analyzer 100 can be reduced.

When a reagent is discharged by the reagent dispenser 240, the reaction container 33 held in the holding hole 171 of the heating table 170 is taken out of the holding hole 171 by the transfer unit 173 or the transfer unit 260 at a first position 174, and is located at the first discharge position 261. The reaction container 33 from which the trigger reagent is discharged at the first discharge position 261 is transferred in the positive direction of the Y axis from the first discharge position 261 by the transfer unit 260, and located at the detection unit 280. Thereafter, the reaction container 33 is transferred in the direction of the X axis to one of the holders 281 of the detection unit 280. The transfer unit 260 transfers the reaction container 33 in the positive direction of the Y axis to a position P1 directly above a line L1 on which the holders 281 of the detection unit 280 are disposed side by side, and then transfers the reaction container 33 so that a time until the reaction container 33 is transferred to one of the holders 281 is equal to a predetermined time irrespective of the position of the holder 281. The transfer unit 260 transfers the reaction container 33 by a transfer distance d1 from the first discharge position 261 to the directly-above position P1.

Similarly, when a reagent is discharged by the reagent dispenser 250, the reaction container 33 held in the holding hole 171 of the heating table 170 is taken out of the holding hole 171 by the transfer unit 173 or the transfer unit 270 at a second position 175, and is located at the second discharge position 271. The reaction container 33 from which the trigger reagent is discharged at the second discharge position 271 is transferred in the negative direction of the X axis from the second discharge position 271 and located at the detection unit 290. Thereafter, the reaction container 33 is transferred in the direction of the Y axis to one of the holders 291 of the detection unit 290. The transfer unit 270 transfers the reaction container 33 in the negative direction of the X axis to a position P2 directly above a line L2 on which the holders 291 of the detection unit 290 are disposed side by side, and then transfers the reaction container 33 so that a time until the reaction container 33 is transferred to one of the holders 291 is equal to a predetermined time irrespective of the position of the holder 291. The transfer unit 270 transfers the reaction container 33 by a transfer distance d2 from the second discharge position 271 to the directly-above position P2.

A distance by which the transfer unit 260 transfers the reaction container 33 from the first discharge position 261 to the detection unit 280 is equal to a distance by which the transfer unit 270 transfers the reaction container 33 from the second discharge position 271 to the detection unit 290. Specifically, the first discharge position 261, the second discharge position 271, and the positions of the detection units 280 and 290 are set to achieve d1 = d2. The positional relation of the directly-above position P1 relative to the detection unit 280 is equal to the positional relation of the directly-above position P2 relative to the detection unit 290, and a pitch between the holders 281 is equal to a pitch between the holders 291. Accordingly, the distance between the first discharge position 261 and one of the holders 281 of the detection unit 280 is equal to the distance between the second discharge position 271 and the holder 291 of the detection unit 290 in a positional relation corresponding to the holder 281.

In this manner, the transfer distances between a position at which the trigger reagent is discharged and the holders 281 and 291 of the respective detection units 280 and 290 are equal to each other when the trigger reagent is dispensed by the reagent dispenser 240 and when the trigger reagent is dispensed by the reagent dispenser 250. Accordingly, a time until detection is started after the trigger reagent is dispensed is equal between when measurement is performed by the detectors 282 of the detection unit 280 and when measurement is performed by the detectors 292 of the detection unit 290 while the same transfer control is applied to the detection unit 280 and the detection unit 290. This prevents difference between results of the measurement by the detection units 280 and 290.

The directly-above position P1 is preferably at a central position in the direction of the X axis, in other words, the direction in which the holders 281 are disposed side by side, in the region 280a. This configuration achieves reduction of the distance between the directly-above position P1 and the holder 281 separated most from the directly-above position P1. Thus, a transfer time when the reaction container 33 is transferred from the first discharge position 261 to each holder 281 in the same time can be adjusted to be shorter. Similarly, the directly-above position P2 is preferably at a central position in the direction of the Y axis, in other words, the direction in which the holders 291 are disposed side by side, in the region 290a.

The paths of transfer by the transfer units 260 and 270 are straight lines in the above description, but may include curved lines. In this case, the transfer distances of the transfer units 260 and 270 are distances by which the reaction containers 33 are transferred along the curved and straight transfer paths.

The transfer distances d1 and d2 are set to be equal to each other in the above description, but do not necessarily need to be equal to each other. The transfer distances d1 and d2 only need to be set such that the difference between measurement results due to the difference between the transfer distances d1 and d2 does not generate a clinical difference in a result of analysis by the information processing device 103.

The transfer unit 260 transfers the reaction container 33 held in the holding hole 171 located at the first position 174 to one of the holders 281. The transfer unit 270 transfers the reaction container 33 held in the holding hole 171 located at the second position 175, which is different from the first position 174, to one of the holders 291. Accordingly, the reaction containers 33 held on the heating table 170 can be transferred in parallel by the transfer units 260 and 270 from two different positions to the detection units 280 and 290.

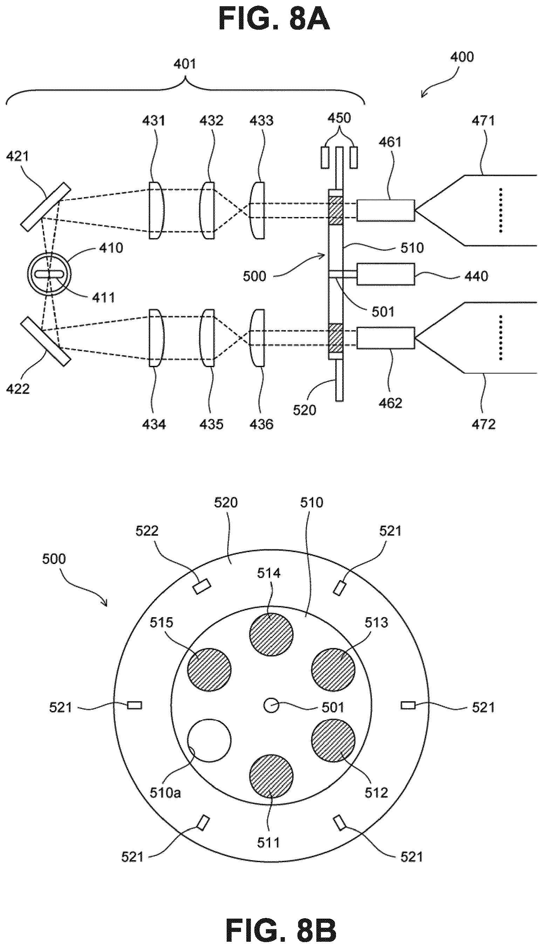

As illustrated in FIG. 8A, a light irradiation unit 400 includes a light source unit 401, binding members 461 and 462, thirteen first optical fibers 471, and thirteen second optical fibers 472. The light source unit 401 includes a light source 410, mirrors 421 and 422, condenser lenses 431 to 436, a motor 440, a light transmissive sensor 450, and a disk-shaped filter unit 500.

The light source 410 is achieved by a halogen lamp. The light source 410 includes a plate filament 411 that emits light from both surfaces thereof, and light having identical characteristics is emitted from both surfaces of the filament 411. With this configuration, light having identical characteristics is emitted from the light source 410 toward the mirrors 421 and 422. The mirrors 421 and 422 reflect the light emitted from the light source 410.

The condenser lenses 431 to 433 condense the light reflected by the mirror 421. The light condensed through the condenser lenses 431 to 433 transmits through one of optical filters 511 to 515 of the filter unit 500 and is guided to the first optical fibers 471. The condenser lenses 434 to 436 condense the light reflected by the mirror 422. The light condensed through the condenser lenses 434 to 436 transmits through one of the optical filters 511 to 515 of the filter unit 500 and is guided to the second optical fibers 472. The filter unit 500 is rotatable about an shaft 501 connected to the rotational axis of the motor 440.

The thirteen first optical fibers 471 are bound by the binding member 461, and the thirteen second optical fibers 472 are bound by the binding member 462. The first optical fibers 471 has a leading end connected to the detection unit 280, and the second optical fibers 472 has a leading end connected to the detection unit 290. The first optical fibers 471 guide light emitted from the light source unit 401 to the detectors 282 of the detection unit 280, and the second optical fibers 472 guide light emitted from the light source unit 401 to the detectors 292 of the detection unit 290.

In this manner, light emitted from the single light source unit 401 is guided to the detectors 282 and 292, and thus variance is unlikely to occur between results of measurement based on the detectors 282 and 292.

As illustrated in FIG. 8B, the filter unit 500 includes a filter plate 510 and a holding member 520. The filter plate 510 is provided with six holes 510a formed at intervals of 60° on a circumference, and the optical filters 511 to 515 are mounted on five of the six holes 510a. The optical filters 511 to 515 each a band-pass filter that transmits light in a predetermined wavelength band and discards light in any other wavelength band. The central wavelengths of transmission wavelength bands of the optical filters 511 to 515 are 340 nm, 405 nm, 575 nm, 660 nm, and 800 nm, respectively. The hole 510a at which no optical filter is mounted is blocked so that no light passes therethrough. Light having a wavelength of 660 nm is used in blood coagulation time measurement, light having a wavelength of 405 nm is used in synthetic substrate measurement, and light having a wavelength of 800 nm is used in immunonephelometry measurement.

The holding member 520 holds the filter plate 510 so that both surfaces of each of the optical filters 511 to 515 are exposed. The filter plate 510 is fixed to the holding member 520. The holding member 520 is provided with one slit 521 and five slits 522 formed at intervals of 60° on a circumference. The slit 521 has a width larger than those of the slits 522 in the rotational direction.

As the filter unit 500 rotates, the optical filters 511 to 515 are sequentially disposed on the path of light condensed through the condenser lenses 431 to 433 and the path of light condensed through the condenser lenses 434 to 436. As the filter unit 500 rotates, the slits 521 and 522 pass through the position of detection by the sensor 450. With this configuration, the rotational position of the filter unit 500 is determined based on detection signals from the sensor 450. Light having transmitted through one of the optical filters 511 to 515 is incident on an end part of the first optical fibers 471 bound by the binding member 461, and incident on an end part of the second optical fibers 472 bound by the binding member 462.

The rotation of the filter unit 500 is controlled so that the angular velocity thereof is maintained constant. Accordingly, the first optical fibers 471 and the second optical fibers 472 are supplied with light in different wavelength bands at constant time intervals. The rotation of the filter unit 500 is controlled by using a detection signal corresponding to the slit 521 among the detection signals from the sensor 450. Specifically, the motor 440 is controlled so that the detection signal corresponding to the slit 521 is periodically detected. The wavelength band of light supplied to the first optical fibers 471 and the second optical fibers 472 is determined by using detection signals corresponding to the slits 522 among the detection signals from the sensor 450. Specifically, the wavelength band of supplied light is identified by counting a detection signal corresponding to one of the slits 522 with respect to the detection signal corresponding to the slit 521. At measurement, the filter unit 500 is rotated, for example, at a speed of 10 rotation per second approximately.

In this manner, the light source unit 401 sequentially and repeatedly emits light having a wavelength of 660 nm for blood coagulation time measurement, light having a wavelength of 405 nm for synthetic substrate measurement, and light having a wavelength of 800 nm for immunonephelometry measurement.

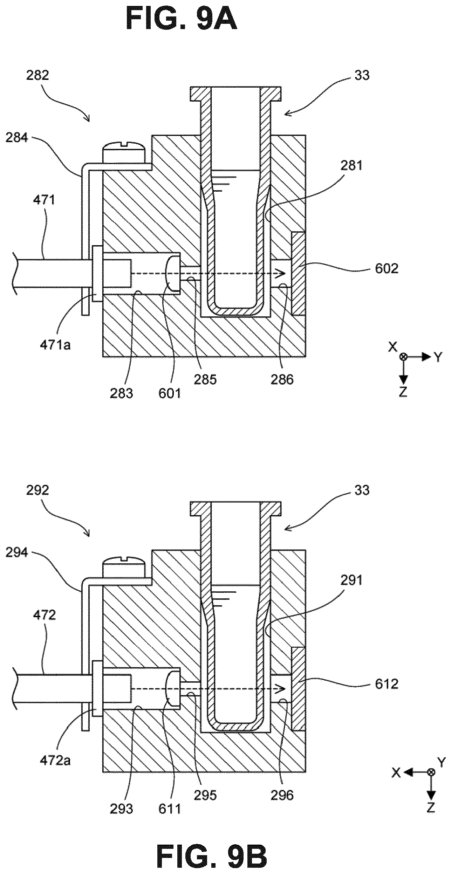

As illustrated in FIG. 9A, each detector 282 includes a condenser lens 601 and a sensor 602. An end part 471a of the first optical fibers 471 is inserted into a circular hole 283 and pressed from behind by a plate spring 284. In this manner, the end part 471a is fixed in the hole 283. The condenser lens 601 is mounted on a side surface of the hole 283 on the positive side of the Y axis. The hole 283 is communicated with the holder 281 through a hole 285. Light emitted from the end part 471a and condensed through the condenser lens 601 is guided to the reaction container 33 held by the holder 281 through the hole 285. The condenser lens 601 is included in a light irradiation unit that irradiates the reaction container 33 with light emitted from the first optical fibers 471.

The sensor 602 is communicated with the holder 281 through a hole 286. Light guided from the condenser lens 601 to the reaction container 33 transmits through the reaction container 33 and a measurement specimen, and then is guided to the sensor 602. The sensor 602 receives light from the reaction container 33 held by the holder 281 and outputs an analysis signal. The detector 282 may include another optical element such as a collimator lens as a component of the light irradiation unit in addition to the condenser lens 601.

As illustrated in FIG. 9B, similarly to the detector 282, each detector 292 includes a condenser lens 611 and a sensor 612. An end part 472a of the second optical fibers 472 is inserted into a circular hole 293 and pressed from behind by a plate spring 294. In this manner, the end part 472a is fixed in the hole 293. The condenser lens 611 is mounted on a side surface of the hole 293 on the negative side of the X axis. The hole 293 is communicated with the holder 291 through a hole 295. Light emitted from the end part 472a and condensed through the condenser lens 611 is guided to the reaction container 33 held by the holder 291 through the hole 295. The condenser lens 611 is included in a light irradiation unit that irradiates the reaction container 33 with light emitted from the second optical fibers 472.

The sensor 612 is communicated with the holder 291 through a hole 296. Light guided from the condenser lens 611 to the reaction container 33 transmits through the reaction container 33 and a measurement specimen, and then is guided to the sensor 612. The sensor 612 receives light from the reaction container 33 held by the holder 291 and outputs an analysis signal. The detector 292 may include another optical element such as a collimator lens as a component of the light irradiation unit in addition to the condenser lens 611.

The signal output from the sensor 602 of the detector 282 and the signal output from the sensor 612 of the detector 292 are transmitted to the controller 103a of the information processing device 103 in FIG. 2. The controller 103a analyzes a sample in the reaction container 33 held by the holder 281 based on temporal change of the signal output from the sensor 602. The controller 103a analyzes a sample in the reaction container 33 held by the holder 291 based on temporal change of the signal output from the sensor 612.

For example, in an analysis based on the coagulation time method, the controller 103a calculates the absorbance of a measurement specimen based on detection signals output from the sensors 602 and 612, and calculates the coagulation time of the measurement specimen to be a time until the calculated absorbance exceeds a predetermined threshold. The controller 103a may calculate, from the detection signals, the turbidity of the measurement specimen in place of the absorbance, and calculate the coagulation time of the sample to be a time until the turbidity exceeds a predetermined threshold. Alternatively, the controller 103a may calculate the coagulation time of the measurement specimen to be a time until the detection signals output from the sensors 602 and 612 each exceed a predetermined threshold.

Although FIGS. 9A and 9B illustrate the configurations of the detectors 282 and 292 when light having transmitted through a measurement specimen is detected, the sensors 602 and 612 may receive light scattered by the measurement specimen, and analysis may be performed by the above-described methods based on detection signals based on the scattered light. In this case, the arrangement of the sensor 602 and the hole 286 is corrected in each detector 282, and the arrangement of the sensor 612 and the hole 296 is corrected in each detector 292.

Signals output from the sensors 602 and 612 include signals that are based on light having all wavelengths and obtained by irradiating a measurement specimen with light having all wavelengths. The signals based on light having all wavelengths are transmitted to the information processing device 103. The controller 103a of the information processing device 103 analyzes a sample by using a signal based on light having a wavelength corresponding to a measurement item set for the sample among the received signals based on light having all wavelengths. Specifically, the controller 103a generates temporally sequential data for light having each of the above-described five wavelengths, and analyzes the sample by using data corresponding to the measurement item for the sample among the generated temporally sequential data. Accordingly, high processing performance can be maintained irrespective of the measurement item.

The coagulation time of a measurement specimen is calculated based on optical information such as absorbance and turbidity obtained from the measurement specimen as described above. The "coagulation time" is, for example, the activated partial thromboplastin time or the prothrombin time.

The coagulation time may be measured based on information other than the optical information, such as viscosity increase due to blood coagulation. When the coagulation time is calculated based on viscosity increase, the detectors 282 and 292 each include a high-frequency emission coil, a high-frequency reception coil, a reaction container installation unit that is disposed between the high-frequency emission coil and the high-frequency reception coil and installs a reaction container housing a steel ball, and electromagnets provided at both ends of the reaction container installation unit. The steel ball inside the reaction container oscillates to right and left by magnetic force generated by the electromagnets. This oscillation decreases as the viscosity increases. The viscosity of a measurement specimen increases when the measurement specimen starts coagulating, and accordingly, the amplitude of oscillation of the steel ball decreases. The detectors 282 and 292 sense change of the amplitude when the high-frequency reception coil receives high-frequency waves emitted by the high-frequency emission coil. The controller 103a of the information processing device 103 calculates the coagulation time based on the sensed temporal change of the amplitude.

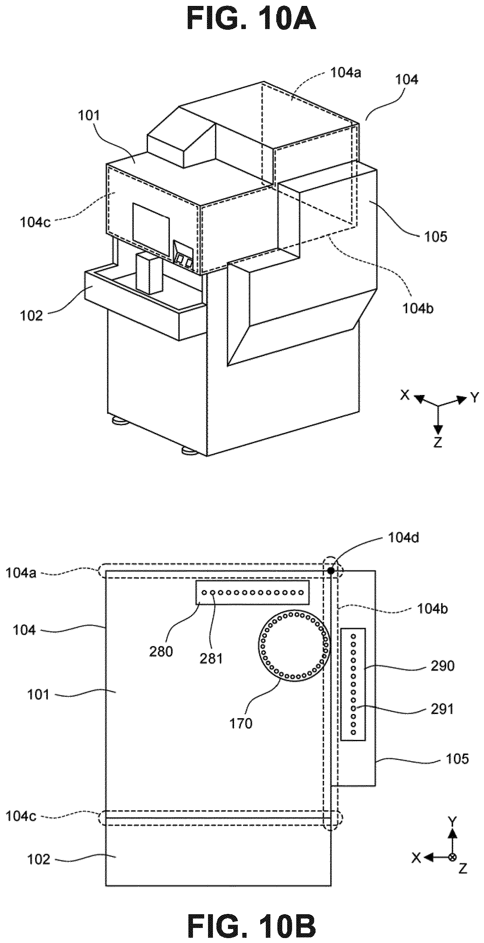

As illustrated in FIG. 10A, the sample analyzer 100 includes housings 104 and 105. The housing 104 covers components of the measurement unit 101 positioned on the positive side of the transfer unit 160 in the direction of the X axis. The housing 104 includes a first side surface 104a positioned on the positive side of the Y axis and in substantially parallel to the X-Z plane, a second side surface 104b positioned on the negative side of the X axis and in substantially parallel to the Y-Z plane, and a third side surface 104c positioned on the negative side of the Y axis and in substantially parallel to the X-Z plane. The second side surface 104b is adjacent to the first side surface 104a, and the third side surface 104c is not adjacent to the first side surface 104a but is adjacent to the second side surface 104b. The housing 105 covers the transfer unit 160, the transfer unit 270, and the detection unit 290. The housing 105 is installed on the housing 104 while partially overlapping the second side surface 104b.

As illustrated in FIG. 10B, the first side surface 104a and the second side surface 104b are adjacent to each other at an adjacent part 104d. The adjacent part 104d extends in the direction of the Z axis. The heating table 170 is disposed near the adjacent part 104d inside the housing 104. The detection unit 280 is disposed along the first side surface 104a on a side of the first side surface 104a, which is closer to the adjacent part 104d. The detection unit 290 is disposed along the second side surface 104b on a side of the second side surface 104b, which is closer to the adjacent part 104d. The holders 281 of the detection unit 280 are disposed side by side along the first side surface 104a in a plan view. The holders 291 of the detection unit 290 are disposed side by side along the second side surface 104b in a plan view. The transporter 102 is disposed along the third side surface 104c.

As illustrated in FIGS. 10A and 10B, since the heating table 170 and the detection units 280 and 290 are disposed near the adjacent part 104d, the heating table 170 and the detection units 280 and 290 can be installed close to each other in the measurement unit 101. Accordingly, increase of the installation area of the sample analyzer 100 can be reduced.

The transporter 102 is disposed along the third side surface 104c, and the detection units 280 and 290 are disposed on a side closer to the first side surface 104a. With this configuration, the process of aspirating a sample from the sample container 32 is performed on the front side in the measurement unit 101, and the process of measuring a measurement specimen is performed on the back side in the measurement unit 101. Accordingly, the sample only needs to be transferred in one direction, in other words, from the front side to the back side in the measurement unit 101, which leads to simplification of the configuration of the measurement unit 101.

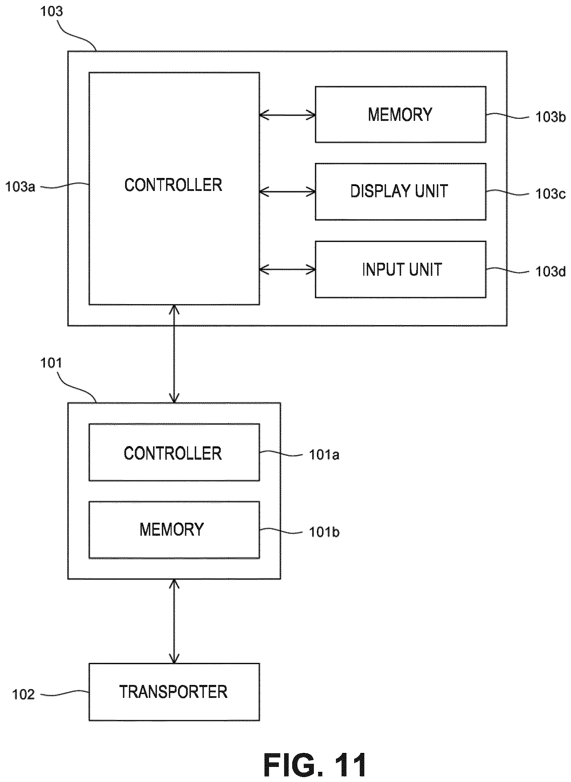

As illustrated in FIG. 11, the measurement unit 101 includes a controller 101a and a memory 101b as circuit components. The controller 101a corresponds to the first controller 24a in FIG. 1. The controller 101a includes an arithmetic processing device such as a CPU, and controls each component of the measurement unit 101 and the transporter 102 in accordance with a computer program stored in the memory 101b. The memory 101b includes storage media such as a ROM, a RAM, and a hard disk, and stores computer programs and information necessary for control by the controller 101a. The memory 101b is also used as a work area when control is performed.

The information processing device 103 includes the controller 103a, a memory 103b, a display unit 103c, and an input unit 103d. The controller 103a includes an arithmetic processing device such as a CPU, and performs analysis processing and control of each component in the information processing device 103 in accordance with a computer program stored in the memory 103b. The memory 103b includes storage media such as a ROM, a RAM, and a hard disk, and stores computer programs and information necessary for processing and control by the controller 103a. The memory 103b is also used as a work area when processing and control are performed. The display unit 103c includes display means such as a monitor. The input unit 103d includes input means such as a keyboard and a mouse. The information processing device 103 is achieved by, for example, a personal computer.

The controller 101a outputs, to the controller 103a, detection signals output from the sensors 602 and 612 as described above. The controller 103a analyzes a measurement specimen based on the received detection signals. Specifically, the controller 103a calculates the absorbance based on the received detection signals as described above, and also calculates the coagulation time from the absorbance. The controller 103a causes the display unit 103c to display the calculated coagulation time and the like as analysis results.

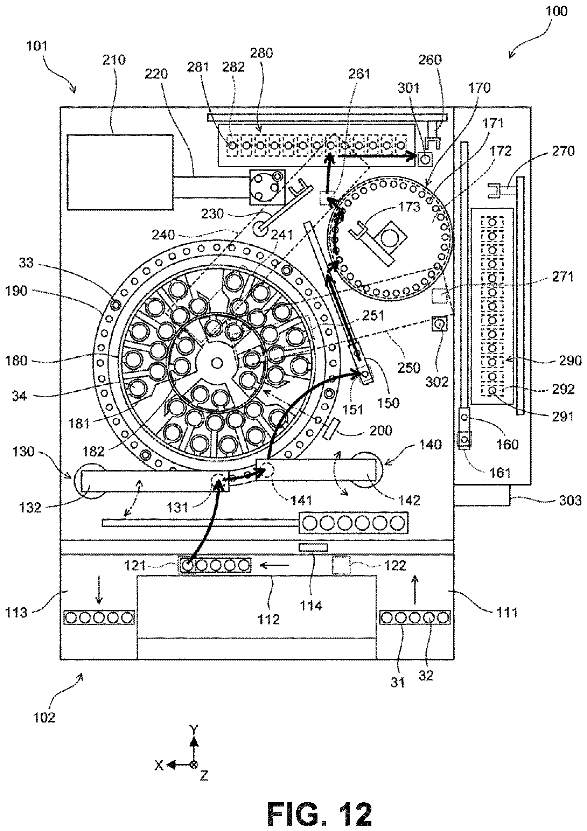

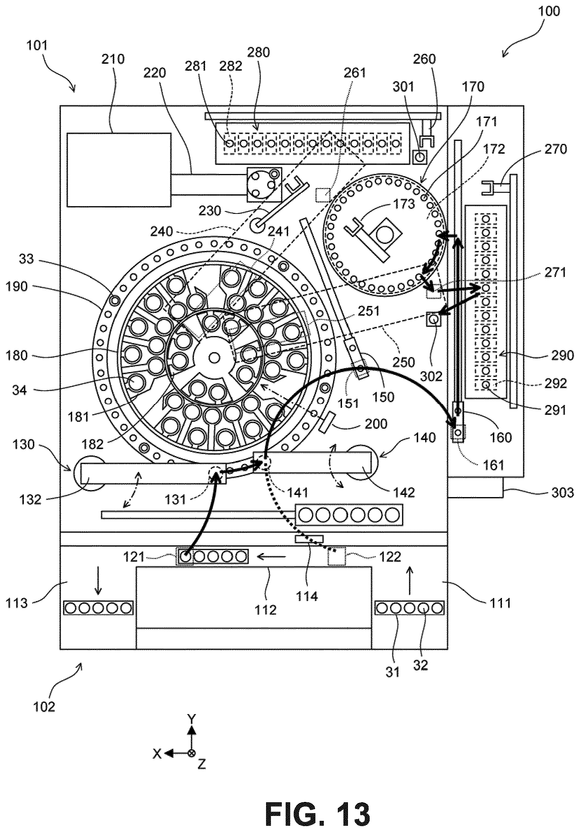

The following describes the transfer path of the reaction container 33 with reference to FIGS. 12 and 13.

When a sample is measured by the detection unit 280, as illustrated in FIG. 12, the sample dispenser 130 aspirates the sample from the sample container 32 at the sample aspirating position 121 and dispenses the aspirated sample into the reaction container 33 on the reaction container table 190. The reaction container table 190 is rotated to a position at which the reaction container 33 can be aspirated by the sample dispenser 140. The sample dispenser 140 aspirates the sample from the reaction container 33 thus moved and dispenses the aspirated sample into the reaction container 33 at the first sample discharging position 151 on the transfer unit 150. Thereafter, the transfer unit 150 transfers the reaction container 33 to a position near the heating table 170. The transferred reaction container 33 is transferred and placed on the heating table 170 by the transfer unit 173. The transfer unit 173 transfers the reaction container 33 to the first discharge position 261, and the reagent dispenser 240 dispenses the adjustment reagent into the reaction container 33, as appropriate.

After heating on the heating table 170 is completed, the heating table 170 rotates to transfer the reaction container 33 to a position near the first discharge position 261. The transfer unit 260 transfers the reaction container 33 to the first discharge position 261. The reagent dispenser 240 dispenses the trigger reagent into the reaction container 33 at the first discharge position 261. Thereafter, the transfer unit 260 transfers and sets the reaction container 33 to one of the holders 281 of the detection unit 280. The detector 282 perform measurement on the reaction container 33 set to the holder 281 and outputs a detection signal to the information processing device 103. When measurement ends, the transfer unit 260 transfers the reaction container 33 to the discarding port 301 and discards the reaction container 33 to the discarding unit 303.

When a sample is measured by the detection unit 290, as illustrated in FIG. 13, the sample dispenser 130 aspirates the sample from the sample container 32 at the sample aspirating position 121 and dispenses the aspirated sample into the reaction container 33 on the reaction container table 190. The reaction container table 190 is rotated to a position at which the reaction container 33 can be aspirated by the sample dispenser 140. The sample dispenser 140 aspirates the sample from the reaction container 33 thus moved, and dispenses the aspirated sample into the reaction container 33 at the second sample discharging position 161 on the transfer unit 160. Thereafter, the transfer unit 160 transfers the reaction container 33 to a position near the heating table 170. The transferred reaction container 33 is transferred and placed on the heating table 170 by the transfer unit 270. The transfer unit 173 transfers the reaction container 33 to the second discharge position 271, and the reagent dispenser 250 dispenses the adjustment reagent into the reaction container 33, as appropriate.

After heating on the heating table 170 is completed, the heating table 170 rotates to transfer the reaction container 33 to a position near the second discharge position 271. The transfer unit 270 transfers the reaction container 33 to the second discharge position 271. The reagent dispenser 250 dispenses the trigger reagent into the reaction container 33 at the second discharge position 271. Thereafter, the transfer unit 270 transfers and sets the reaction container 33 to one of the holders 291 of the detection unit 290. The detector 292 performs measurement on the reaction container 33 set to the holder 291, and outputs a detection signal to the information processing device 103. When measurement ends, the transfer unit 270 transfers the reaction container 33 to the discarding port 302 and discards the reaction container 33 to the discarding unit 303.

As illustrated with a dotted line in FIG. 13, when the sample dispenser 140 aspirates a sample from the sample container 32 at the sample aspirating position 122, the aspirated sample is directly dispensed into the reaction container 33 at the first sample discharging position 151 or a sample at the second sample discharging position 161. Thereafter, the reaction container 33 in which the sample is dispensed in this manner is transferred to the detection unit 280 or the detection unit 290 through a path same as that described above.

After transferred by the transfer unit 150, the reaction container 33 set on the heating table 170 may be transferred to one of the holders 291 of the detection unit 290 by the transfer unit 270 and measured. After transferred by the transfer unit 160, the reaction container 33 set on the heating table 170 may be transferred to one of the holders 281 of the detection unit 280 by the transfer unit 260 and measured.

The controller 101a illustrated in in FIG. 11 determines a path through which the reaction container 33 is to be transferred so that, for example, a sample is processed at higher efficiency. For example, the controller 101a transfers the reaction container 33 preferentially to one of the detection units 280 and 290 in which a larger number of holders 281 hold no reaction container 33. Alternatively, when the number of holders to which the reaction containers 33 are set is same between the detection units 280 and 290, the controller 101a transfers the reaction container 33 preferentially to one of the detection units in which measurement on one of the set reaction containers 33 is to be completed in a shorter time. When no empty reaction container 33 is mounted on the reaction container table 190, the sample dispenser 140 may dispense a sample directly to the reaction container 33 at the first sample discharging position 151 or the second sample discharging position 161. The transfer path of the reaction container 33 may be determined on any criterion other than those described above.

## Claims

1. A sample analyzer comprising:
a heating table comprising:
holding holes in which reaction containers each housing a sample are held, respectively; and
a heater that heats the reaction containers held in the holding holes, respectively;
a reagent dispensing unit that dispenses a reagent into the reaction containers heated on the heating table;
a detection unit comprising:
holders that hold the reaction containers each housing a measurement specimen prepared from each sample and the reagent, respectively; and
detectors that detect analysis signals from the measurement specimens in the reaction containers held by the holders, respectively;
a controller that analyzes each sample based on each analysis signal detected by the detection unit;
a first transfer unit that transfers one of the reaction containers held in the holding holes of the heating table to one of the holders positioned in a first region of the detection unit; and
a second transfer unit that transfers one of the reaction containers held in the holding holes of the heating table to one of the holders positioned in a second region of the detection unit, which is different from the first region.

2. The sample analyzer according to claim 1, wherein the controller calculates a coagulation time based on temporal change of an analysis signal detected by the detection unit.

3. The sample analyzer according to claim 1 or 2, wherein
the holders comprise:
a first holder positioned in the first region; and
a second holder positioned in the second region,
the detectors comprise:
a first detector that detects an analysis signal from the measurement specimen in the reaction container held by the first holder; and
a second detector that detects an analysis signal from the measurement specimen in the reaction container held by the second holder, and
the controller analyzes a sample in the reaction container held by the first holder based on a signal detected by the first detector, and analyzes a sample in the reaction container held by the second holder based on a signal detected by the second detector.

4. The sample analyzer according to claim 3, further comprising:
a discarding unit configured to house one or more reaction containers that is to be discarded;
a first discarding transfer unit that transfers, to the discarding unit, the reaction container held by the first holder and to be discarded; and
a second discarding transfer unit that transfers, to the discarding unit, the reaction container held by the second holder and to be discarded.

5. The sample analyzer according to claim 3 or 4, further comprising a light irradiation unit comprising:
a light source unit;
a first optical fiber that guides, to the first detector, light emitted from the light source unit; and
a second optical fiber that guides, to the second detector, light emitted from the light source unit.

6. The sample analyzer according to claim 5, wherein the light source unit emits at least one of:
light having a first wavelength for blood coagulation time measurement;
light having a second wavelength for synthetic substrate measurement; and
light having a third wavelength for immunonephelometry measurement.

7. The sample analyzer according to claim 5 or 6, wherein the light source unit emits:
light having a first wavelength for blood coagulation time measurement;
light having a second wavelength for synthetic substrate measurement; and
light having a third wavelength for immunonephelometry measurement.

8. The sample analyzer according to any one of claims 5 to 7, wherein
the light source unit sequentially and repeatedly emits:
light having a first wavelength;
light having a second wavelength; and
light having a third wavelength;
the controller generates temporally sequential data for the light having the first wavelength, the light having the second wavelength, and the light having the third wavelength, respectively, and analyzes the sample based on the generated temporally sequential data, and
the light having the first wavelength, the light having the second wavelength, and the light having the third wavelength are each one of light for blood coagulation time measurement, light for synthetic substrate measurement, and light for immunonephelometry measurement.

9. The sample analyzer according to any one of claims 3 to 8, wherein
the first detector comprises a sensor that receives light from the reaction container held by the first holder and outputs the analysis signal,
the second detector comprises a sensor that receives light from the reaction container held by the second holder and outputs the analysis signal, and
the controller analyzes the sample in the reaction container held by the first holder based on temporal change of the signal output from the sensor of the first detector, and analyzes the sample in the reaction container held by the second holder based on temporal change of the signal output from the sensor of the second detector.

10. The sample analyzer according to any one of claims 3 to 9, wherein
the first transfer unit transfers the reaction container held in the holding hole at a first position to the first holder, and
the second transfer unit transfers the reaction container held in the holding hole at a second position different from the first position to the second holder.

11. The sample analyzer according to one of claims 3 to 10, further comprising a housing comprising a first side surface and a second side surface adjacent to the first side surface, wherein
the heating table is disposed near an adjacent part at which the first side surface is adjacent to the second side surface inside the housing,
the detection unit comprises:
a first detection unit disposed along the first side surface of the housing on a side of the first side surface, which is closer to the adjacent part, and
a second detection unit disposed along the second side surface of the housing on a side of the second side surface, which is closer to the adjacent part,
the first detection unit comprises the first holders disposed side by side along the first side surface in a plan view, and
the second detection unit comprises the second holders disposed side by side along the second side surface in the plan view.

12. The sample analyzer according to claim 11, wherein a direction in which the first holders are disposed side by side is substantially orthogonal to a direction in which the second holders are disposed side by side.

13. The sample analyzer according to claim 11 or 12, further comprising:
a transporter that transports a sample container housing the sample to a sample aspirating position; and
a sample dispensing unit that dispenses the sample from the sample container transported by the transporter into one of the reaction containers, wherein
the housing comprises a third side surface not adjacent to the first side surface but adjacent to the second side surface, and
the transporter is disposed along the third side surface of the housing.

14. The sample analyzer according to any one of claims 11 to 13, wherein
the reagent dispensing unit dispenses the reagent into the reaction container at a first discharge position on a transfer path through which the reaction container is transferred by the first transfer unit, and
the reagent dispensing unit dispenses the reagent into the reaction container at a second discharge position on a transfer path through which the reaction container is transferred by the second transfer unit.

15. The sample analyzer according to claim 14, wherein a transfer distance by which the first transfer unit transfers the reaction container from the first discharge position to the first detection unit is substantially equal to a transfer distance by which the second transfer unit transfers the reaction container from the second discharge position to the second detection unit.

16. The sample analyzer according to any one of claims 1 to 15, further comprising:
a transporter that transports a sample container housing a sample to a sample aspirating position;
a sample dispensing unit that:
aspirates the sample from the sample container transported to the sample aspirating position, and dispenses the aspirated sample into a reaction container at a first sample discharging position; and
aspirates the sample from the sample container transported to the sample aspirating position, and dispenses the aspirated sample into a reaction container at a second sample discharging position;
a first sample transfer unit that transfers the reaction container into which the sample is dispensed by the sample dispensing unit from the first sample discharging position to the heating table; and
a second sample transfer unit that transfers the reaction container into which the sample is dispensed by the sample dispensing unit from the second sample discharging position to the heating table.

17. The sample analyzer according to any one of claims 1 to 16, wherein
the reagent dispensing unit comprises:
a first reagent dispenser comprising a first pipette; and
a second reagent dispenser comprising a second pipette,
the first reagent dispenser dispenses the reagent into the reaction container transferred by the first transfer unit, and
the second reagent dispenser dispenses the reagent into the reaction container transferred by the second transfer unit.

18. The sample analyzer according to any one of claims 1 to 17, further comprising a reagent table on which reagent containers each housing a reagent are configured to be placed, wherein the reagent dispensing unit is supported by a support unit disposed above the reagent table.

19. The sample analyzer according to any one of claims 1 to 18, wherein the controller comprises:
a first controller that controls a mechanism that measures the measurement specimen; and
a second controller that analyzes the sample.

20. The sample analyzer according to any one of claims 1 to 19, wherein the sample comprises plasma or serum.

21. A sample analyzer comprising:
a detection unit comprising:
holders that hold reaction containers each housing a measurement specimen prepared from a sample and a reagent, respectively, and
detectors that detect analysis signals from the measurement specimens in the reaction containers held in the holders, respectively;
a controller that analyzes each sample based on each analysis signal detected by the detection unit;
a discarding unit configured to house one or more reaction containers that is to be discarded;
a first discarding transfer unit that transfers, to the discarding unit, one of the reaction containers held by the holders positioned in a first region of the detection unit and to be discarded; and
a second discarding transfer unit that transfers, to the discarding unit, one of the reaction containers held by the holders positioned in a second region of the detection unit, which is different from the first region, and to be discarded.
